# EUROPEAN PATENT APPLICATION

(11) **EP 4 769 982 A1**
(43) Date of publication of application: **01.07.2026**
(21) Application number: 24891649.6
(22) Date of filing: 04.10.2024
(51) Int. Cl.: H04B 17/391, G06N 3/08, H04B 17/318, H04W 84/12

(54) **WI-FI SIGNAL-BASED COPRESENCE ESTIMATION METHOD AND DEVICE**

(30) Priority: 17.11.2023 KR 20230159709
(71) Applicant: SAMSUNG ELECTRONICS CO., LTD., Yeongtong-gu Suwon-si, Gyeonggi-do 16677 (KR)
(72) Inventor: PARK, Chanjong, Suwon-si, Gyeonggi-do 16677 (KR); BAHN, Dongha, Suwon-si, Gyeonggi-do 16677 (KR); JANG, Junik, Suwon-si, Gyeonggi-do 16677 (KR)
(74) Representative: Appleyard Lees IP LLP
(86) International application number: PCT/KR2024/015100
(87) International publication number: WO 2025/105702

(57) **Abstract**

This operating method of a user device may include the steps of: obtaining a first Wi-Fi RSSI corresponding to nearby Wi-Fi networks of the user device and a plurality of second Wi-Fi RSSIs corresponding to nearby Wi-Fi networks of each of other devices; inputting the first Wi-Fi RSSI and the plurality of second Wi-Fi RSSls to a copresence estimation model to estimate whether the other devices are present in the same space as the user device; generating a feedback data set including the first Wi-Fi RSSI and the plurality of second Wi-Fi RSSIs on the basis of feedback on a result of the estimation; generating a filtered data set by filtering out a pre-collected first Wi-Fi RSSI and a pre-collected plurality of second Wi-Fi RSSIs according to a preset condition; and updating the copresence estimation model by using the feedback data set and the filtered data set.

## Description

### Technical Field

The present disclosure relates to a method and device for estimating copresence between devices, based on Wi-Fi signals, and optimizing an artificial intelligence model for estimating copresence.

### Background Art

Technologies utilizing Wi-Fi signals have been used to estimate locations of devices in indoor environments. In addition, as artificial intelligence is utilized in various fields, artificial intelligence may also be applied to technologies for estimating locations of devices in indoor environments. However, even when artificial intelligence is used, because inference results may be inaccurate depending on diverse environments of users, the inference results may not always be reliable. To this end, user feedback may be used as training data, but it is difficult to secure training data suitable for a user's environment based on the user feedback alone.

### Disclosure of Invention

### Solution to Problem

According to an aspect of the present disclosure, an operating method of a user device may be provided. The method may include obtaining a first Wi-Fi Received Signal Strength Indicator (RSSI) corresponding to nearby Wi-Fi networks of the user device. The method may include obtaining a plurality of second Wi-Fi RSSIs corresponding to nearby Wi-Fi networks of each of other devices. The method may include estimating whether the other devices are present in a same space as the user device by applying the first Wi-Fi RSSI and the plurality of second Wi-Fi RSSIs as input data to a copresence estimation model. The method may include receiving feedback on a result of the estimation. The method may include generating, based on the feedback, a feedback dataset including the first Wi-Fi RSSI and the plurality of second Wi-Fi RSSIs. The method may include obtaining a pre-collected first Wi-Fi RSSI and a plurality of pre-collected second Wi-Fi RSSIs. The method may include generating a filtered dataset by filtering the pre-collected first Wi-Fi RSSI and the plurality of pre-collected second Wi-Fi RSSIs according to preset conditions. The method may include updating the copresence estimation model by using the feedback dataset and the filtered dataset.

According to an aspect of the present disclosure, a user device may be provided. The user device may include: a communication interface; memory storing one or more instructions; and one or more processors configured to execute the one or more instructions stored in the memory. The one or more processors may execute the one or more instructions to obtain a first Wi-Fi RSSI corresponding to nearby Wi-Fi networks of the user device. The one or more processors may execute the one or more instructions to obtain a plurality of second Wi-Fi RSSIs corresponding to nearby Wi-Fi networks of each of other devices. The one or more processors may execute the one or more instructions to estimate whether the other devices are present in a same space as the user device by applying the first Wi-Fi RSSI and the plurality of second Wi-Fi RSSIs as input data to a copresence estimation model. The one or more processors may execute the one or more instructions to receive feedback on a result of the estimation. The one or more processors may execute the one or more instructions to generate, based on the feedback, a feedback dataset including the first Wi-Fi RSSI and the plurality of second Wi-Fi RSSIs. The one or more processors may execute the one or more instructions to obtain a pre-collected first Wi-Fi RSSI and a plurality of pre-collected second Wi-Fi RSSIs. The one or more processors may execute the one or more instructions to generate a filtered dataset by filtering the pre-collected first Wi-Fi RSSI and the plurality of pre-collected second Wi-Fi RSSIs according to preset conditions. The one or more processors may execute the one or more instructions to update the copresence estimation model by using the feedback dataset and the filtered dataset.

According to an aspect of the present disclosure, a computer-readable recording medium having recorded thereon a program for executing any one of the above-described and below-described methods related to an operation of a user device may be provided.

### Brief Description of Drawings

FIG. 1 is a diagram illustrating an operation, performed by a user device, of estimating a location thereof indoors, according to an embodiment of the present disclosure.
FIG. 2 is a diagram illustrating an operation of personalizing an artificial intelligence model for estimating whether a user device is present in a same space as another device, according to an embodiment of the present disclosure.
FIG. 3 is a diagram illustrating an operation of a copresence estimation model used by a user device, according to an embodiment of the present disclosure.
FIG. 4A is a diagram illustrating an operation, performed by a user device, of obtaining feedback on a result of copresence estimation, according to an embodiment of the present disclosure.
FIG. 4B is a diagram illustrating an operation, performed by a user device, of generating feedback data, according to an embodiment of the present disclosure.
FIG. 5A is a diagram illustrating data collection operations of a user device and another device according to an embodiment of the present disclosure.
FIG. 5B is a diagram illustrating an operation, performed by a user device, of generating a filtered dataset, according to an embodiment of the present disclosure.
FIG. 6 is a diagram illustrating a training dataset generated by a user device, according to an embodiment of the present disclosure.
FIG. 7A is a flowchart illustrating an operating method of a user device when receiving feedback, according to an embodiment of the present disclosure.
FIG. 7B is a flowchart illustrating an operation of FIG. 7A in more detail.
FIG. 8 is a diagram illustrating an operation, performed by a user device, of generating a training dataset, according to an embodiment of the present disclosure.
FIG. 9 is a diagram illustrating an operation, performed by a user device, of generating a training dataset, according to an embodiment of the present disclosure.
FIG. 10 is a diagram illustrating an operation, performed by a user device, of using a copresence estimation model, according to an embodiment of the present disclosure.
FIG. 11 is a block diagram illustrating a configuration of a user device according to an embodiment of the present disclosure.

### Mode for the Invention

Terms used in the present specification will be briefly described, and the present disclosure will be described in detail. In the present disclosure, the expression "at least one of a, b, or c" may refer to "a", "b", "c", "a and b", "a and c", "b and c", "all of a, b, and c", or variations thereof.

The terms used in the present disclosure are selected from among currently widely used general terms by taking into consideration the functions thereof in the present disclosure, but the terms may vary depending on the intention of one of ordinary skill in the art, precedents, or the emergence of new technologies. In addition, in certain cases, terms arbitrarily selected by the applicant may be used, and in such cases, the meanings thereof will be described in detail in the relevant description section. Therefore, the terms used in the present disclosure should be defined based on the meanings of the terms and the overall content of the present disclosure, rather than simply based on the names of the terms.

A singular expression may include a plural expression unless the context clearly indicates otherwise. Terms used herein, including technical or scientific terms, have the same meanings as commonly understood by one of ordinary skill in the art described herein. In addition, although terms including ordinal numbers, such as "first" and "second," may be used herein to describe various elements, these elements should not be limited by these terms. These terms are only used to distinguish one element from another element.

Throughout the specification, when a part "includes" an element, it is to be understood that, unless otherwise specified to the contrary, other elements are not excluded and may be further included. In addition, the terms such as "...unit" and "module" used in the specification refer to a unit that processes at least one function or operation, which may be implemented in hardware, software, or a combination of hardware and software.

Hereinafter, embodiments of the present disclosure will be described in detail with reference to the accompanying drawings such that one of ordinary skill in the art may easily implement the present disclosure. However, the present disclosure may be implemented in many different forms and is not limited to the embodiments described herein. In addition, in the drawings, parts unrelated to the description are omitted in order to clearly describe the present disclosure, and like elements are denoted by like reference numerals throughout the specification.

Hereinafter, the present disclosure will be described with reference to the accompanying drawings.

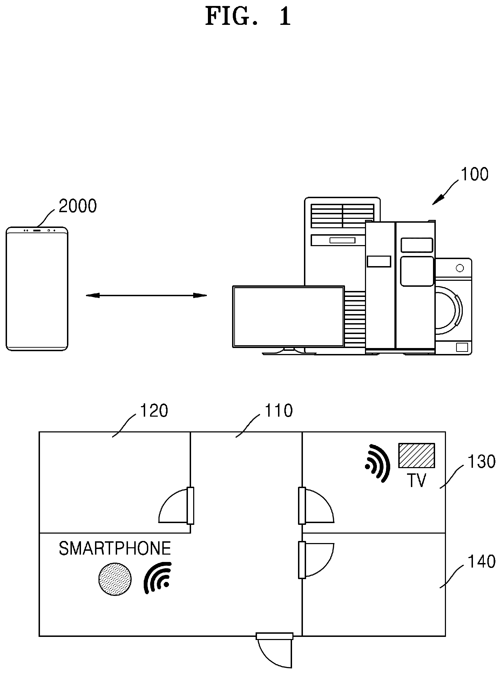

FIG. 1 is a diagram illustrating an operation, performed by a user device, of estimating a location thereof indoors, according to an embodiment of the present disclosure.

Referring to FIG. 1, a user device 2000 according to an embodiment may estimate a relative location thereof with respect to a plurality of other devices 100 indoors. For example, the user device 2000 may estimate whether the user device 2000 is located in the same space as or a different space from each of the other devices 100.

In an embodiment, the term "space" may refer to a three-dimensional environment that is physically separated by a spatial layout (e.g., floors, walls, pillars, ceilings, etc.). For example, assuming a user's home environment, a room A 110, a room B 120, a room C 130, and a living room 140 may each be referred to as a space. In the example of FIG. 1, when a smartphone is in the living room 140 and a TV is in Room B 120, the smartphone and the TV may be regarded as being present in different spaces.

In an embodiment, the user device 2000 and the other devices 100 may be communicatively connected to interact with each other. For example, the user device 2000 and the other devices 100 may be connected to the same network (e.g., home Wi-Fi). Alternatively, the user device 2000 and the other devices 100 may be connected to the same server (e.g., a cloud server), but are not limited thereto.

The user device 2000 may include various types of devices. For example, the user device 2000 may be a mobile device such as a tablet PC or a smartphone. The other devices 100 may include various types of devices. The other devices 100 may include, for example, various home appliances such as washing machines, dryers, vacuum cleaners, robot vacuum cleaners, air conditioners, clothes managers, air purifiers, and dishwashers, but are not limited thereto. In an embodiment, a user may use the user device 2000 to manage and control the other devices 100. The user device 2000 may receive a user input and, based on the received user input, request information from the plurality of other devices 100 or control the plurality of other devices 100.

In an embodiment, the user device 2000 may estimate whether the other devices 100 are present in the same space as the user device. In this case, the user device 2000 may estimate copresence or non-copresence between devices by using a copresence estimation model, which is an artificial intelligence model. The user device 2000 may optimize the copresence estimation model to suit a user space. To optimize the copresence estimation model, the user device 2000 may collect and process data to generate training data.

Specific operations, performed by the user device 2000, of collecting data for training the copresence estimation model and fine-tuning the copresence estimation model will be described in more detail through the drawings and descriptions thereof provided below.

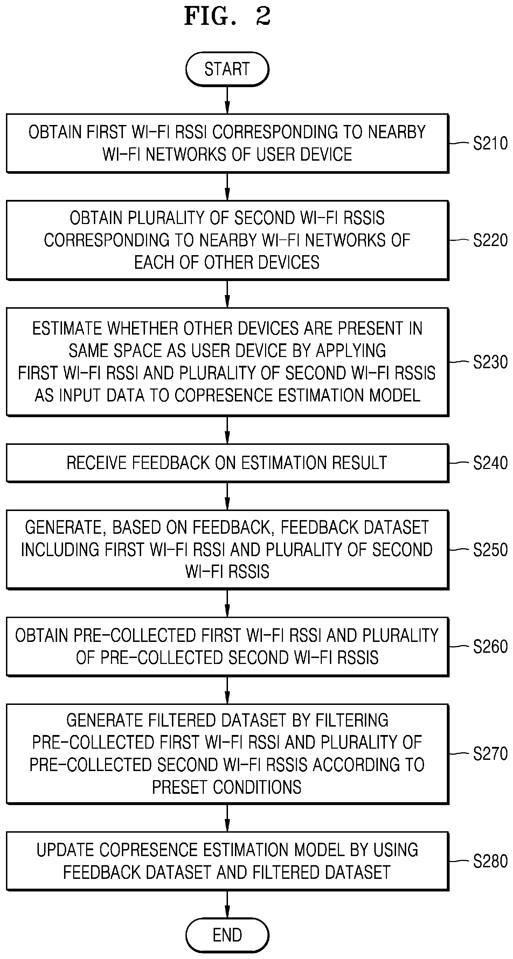

FIG. 2 is a diagram illustrating an operation of personalizing an artificial intelligence model for estimating whether a user device is present in a same space as another device, according to an embodiment of the present disclosure.

In operation S210, the user device 2000 may obtain a Wi-Fi RSSI corresponding to nearby Wi-Fi networks of the user device 2000. In the present disclosure, a Wi-Fi RSSI received by the user device 2000 may be referred to as a first Wi-Fi RSSI.

In an embodiment, the user device 2000 may obtain an RSSI value indicating the reception strength of a Wi-Fi signal received through communication circuitry (e.g., a Wi-Fi card, etc.) included in the communication interface. An RSSI may be a value expressed in units of dBm.

In an embodiment, when a plurality of Wi-Fi routers or wireless access points (APs) are present near the user device 2000, a plurality of RSSI values may be provided. For example, an RSSI may be a sequence of values respectively corresponding to nearby Wi-Fi networks.

In operation S220, the user device 2000 may obtain a plurality of Wi-Fi RSSIs corresponding to nearby Wi-Fi networks of each of other devices. In the present disclosure, a Wi-Fi RSSI received by a device other than the user device 2000 may be referred to as a second Wi-Fi RSSI. In other words, in order to distinguish a Wi-Fi RSSI of the user device 2000 from a Wi-Fi RSSI of any other device, the Wi-Fi RSSI of the user device 2000 will be referred to as the first Wi-Fi RSSI, and the Wi-Fi RSSI of any other device will be referred to as the second Wi-Fi RSSI. However, both the first Wi-Fi RSSI and the second Wi-Fi RSSI essentially refer to a Wi-Fi RSSI typically obtained by a device.

In an embodiment, the number of other devices may be 2 or more. For example, the user device 2000 may receive, from a device A that is another device, a Wi-Fi RSSI of the device A, and receive, from a device B that is another device, a Wi-Fi RSSI of the device B. In other words, the user device 2000 may obtain a plurality of second Wi-Fi RSSIs respectively corresponding to the other devices. Continuing with the above-described example, the plurality of second Wi-Fi RSSIs may include the Wi-Fi RSSI of the device A and the Wi-Fi RSSI of the device B.

In operation S230, the user device 2000 may estimate whether the other devices are present in the same space as the user device 2000 by applying the first Wi-Fi RSSI and the plurality of second Wi-Fi RSSIs as input data to a copresence estimation model.

In an embodiment, the copresence estimation model may be an artificial intelligence model trained to receive Wi-Fi RSSIs of two devices as input and estimate whether the two devices are present in the same space.

The user device 2000 may input, into the copresence estimation model, input data including the first Wi-Fi RSSI and the second Wi-Fi RSSI. The plurality of second Wi-Fi RSSIs include Wi-Fi RSSIs of respective devices other than the user device 2000. For example, the plurality of second Wi-Fi RSSIs may include the Wi-Fi RSSI of the device A and the Wi-Fi RSSI of the device B. For example, the user device 2000 may input, into the copresence estimation model, the Wi-Fi RSSI of the device A among the first Wi-Fi RSSI and the plurality of second Wi-Fi RSSIs to estimate whether the device A is present in the same space as the user device 2000. In addition, for example, the user device 2000 may input, into the copresence estimation model, the Wi-Fi RSSI of the device B among the first Wi-Fi RSSI and the plurality of second Wi-Fi RSSIs to estimate whether the device B is present in the same space as the user device 2000.

In operation S240, the user device 2000 may receive feedback on a result of the estimation. The user device 2000 may obtain, from the user, a user input for inputting feedback.

In an embodiment, the feedback may include positive feedback. The positive feedback may indicate that the result of the estimation of the copresence estimation model is accurate. For example, the user device 2000 may estimate that the device A is present in the same space as the user device 2000, or may estimate that the device A is present in a different space. When the result of the estimation of the user device 2000 is accurate, the user may input a user input indicating positive feedback.

In an embodiment, the feedback may include negative feedback. The negative feedback may indicate that the result of the estimation of the copresence estimation model is inaccurate. For example, the user device 2000 may estimate that the device B is present in the same space as the user device 2000, or may estimate that the device B is present in a different space. When the result of the estimation of the user device 2000 is inaccurate, the user may input a user input indicating negative feedback.

In an embodiment, the user device 2000 may request feedback from the user. For example, the user device 2000 may output a result of estimating whether the user device 2000 and another device (e.g., the device A and/or the device B) are present in the same space, and execute a feedback request function for requesting accuracy/inaccuracy of the result of the estimation. In response to a feedback request, the user device 2000 may obtain a user input for inputting feedback on a result of estimating copresence or non-copresence.

In an embodiment, the user device 2000 may be a mobile device (e.g., a smartphone, etc.). In addition, the other devices may be devices with relatively low mobility (e.g., TVs, etc.). Accordingly, location information (e.g., a room A, a room B, a living room, etc.) of another device may be pre-stored therein. The location information of the other device may be input by the user. In an embodiment, the feedback may include location information of the user device 2000. The user device 2000 may receive current location information (e.g., a room A, a room B, a living room, etc.) of the user device 2000. The current location information of the user device 2000 may be used to match with the location information of the other device.

In operation S250, the user device 2000 may generate, based on the feedback, a feedback dataset including the first Wi-Fi RSSI and the plurality of second Wi-Fi RSSIs.

In an embodiment, the user device may generate a data pair to be included in the feedback dataset, based on the result of the estimation obtained in operation S230 and the user feedback obtained in operation S240. For example, the user device 2000 may generate a positive pair, which is a data pair indicating that another device is present in the same space as the user device 2000. In addition, for example, the user device 2000 may generate a negative pair, which is a data pair indicating that another device is present in a different space from the user device 2000.

In other words, the feedback dataset may include a plurality of data pairs each including {first Wi-Fi RSSI, second Wi-Fi RSSI}, and each data pair may be annotated with information indicating whether devices are present in the same space or in different spaces.

In operation S260, the user device 2000 may obtain a pre-collected first Wi-Fi RSSI and a plurality of pre-collected second Wi-Fi RSSIs.

The pre-collected first Wi-Fi RSSI may be collected periodically or aperiodically from the user device 2000. The plurality of pre-collected second Wi-Fi RSSIs may be collected periodically or aperiodically from the other devices. For example, the plurality of pre-collected second Wi-Fi RSSIs may include a Wi-Fi RSSI pre-collected from the device A and a Wi-Fi RSSI pre-collected from the device B. The user device 2000 may receive a pre-collected second Wi-Fi RSSI from each of the other devices.

In an embodiment, operation S260 may be performed only when the feedback of operation S240 is received. The user device 2000 may perform operation S260 in response to obtaining the feedback. Based on obtaining the feedback, the user device 2000 may update the copresence estimation model by performing operations S270 to S280 described below.

In operation S270, the user device 2000 may generate a filtered dataset by filtering the pre-collected first Wi-Fi RSSI and the plurality of pre-collected second Wi-Fi RSSIs according to preset conditions.

In an embodiment, the user device 2000 may apply the pre-collected first Wi-Fi RSSI and the plurality of pre-collected second Wi-Fi RSSIs as input data to the copresence estimation model. By using the copresence estimation model, the user device 2000 may estimate whether another device was present in the same space as the user device 2000 at a time point when a Wi-Fi RSSI was collected. For example, the user device 2000 may input, into the copresence estimation model, the Wi-Fi RSSI of the device A among the pre-collected first Wi-Fi RSSI and the plurality of pre-collected second Wi-Fi RSSIs to estimate whether the device A was present in the same space as the user device 2000 at a corresponding time point. In addition, for example, the user device 2000 may input, into the copresence estimation model, the Wi-Fi RSSI of the device B among the pre-collected first Wi-Fi RSSI and the plurality of pre-collected second Wi-Fi RSSIs to estimate whether the device B was present in the same space as the user device 2000 at a corresponding time point.

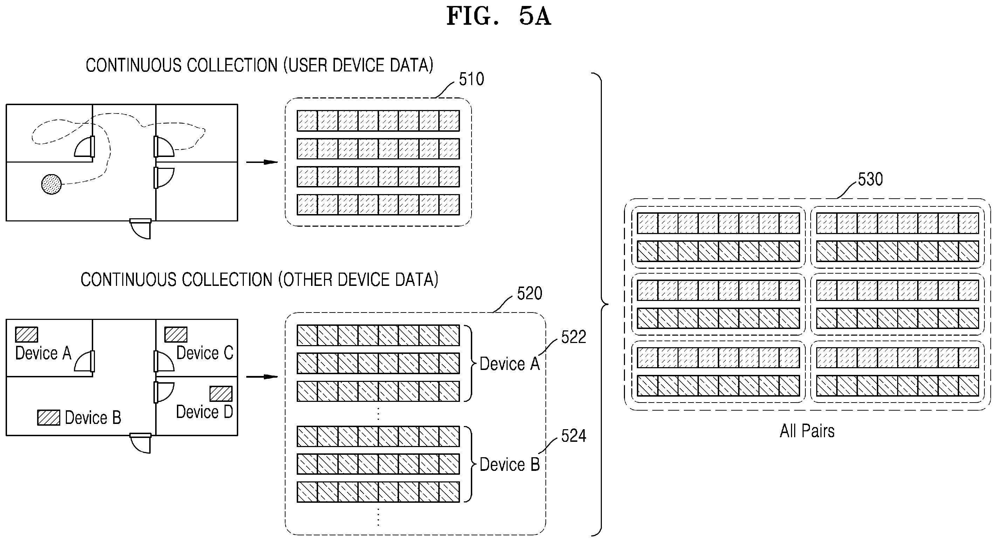

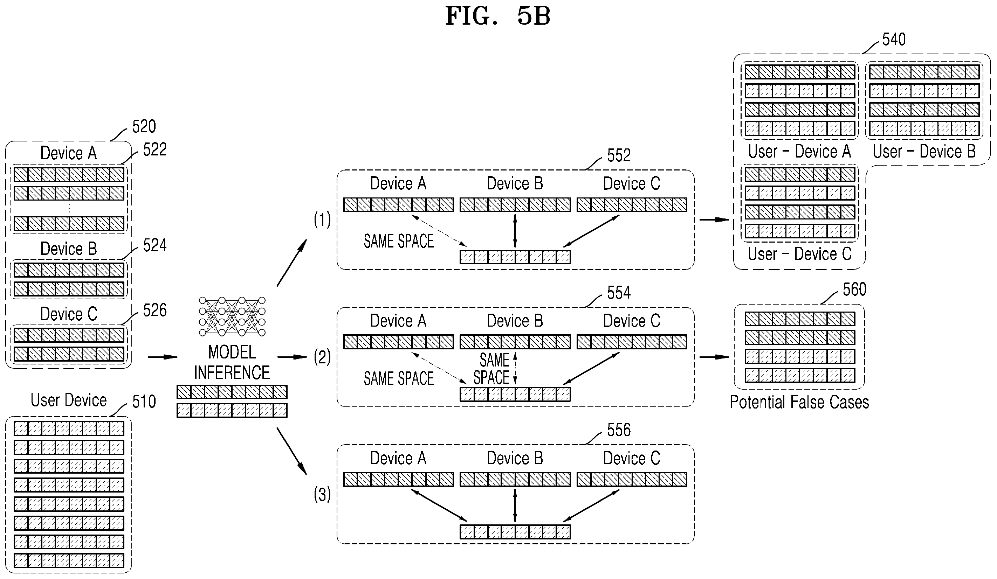

In an embodiment, the preset conditions, according to which the user device 2000 filters data, may be defined based on the number of devices present in the same space as the user device 2000. The user device 2000 may determine, based on the number of devices estimated to be present in the same space as the user device, among the other devices, whether to filter the pre-collected first Wi-Fi RSSI and the plurality of pre-collected second Wi-Fi RSSIs. The pre-set condition will be further described in the description of FIGS. 5A and 5B.

The user device 2000 may generate the filtered dataset by filtering out bad data and leaving only good data, among the pre-collected first Wi-Fi RSSI and the plurality of pre-collected second Wi-Fi RSSIs. The filtered dataset may include a plurality of data pairs each including {first Wi-Fi RSSI, second Wi-Fi RSSI}, and each data pair may be annotated with information indicating whether devices are present in the same space or in different spaces.

In operation S280, the user device 2000 may update the copresence estimation model by using the feedback dataset and the filtered dataset.

In an embodiment, the feedback dataset and the filtered dataset include Wi-Fi RSSIs collected within the user's space. The user device 2000 may fine-tune the copresence estimation model by using the feedback dataset and the filtered dataset as training datasets. The user device 2000 may increase the accuracy of copresence estimation within the user's space by using the feedback dataset for training. In this regard, for the feedback data, it is difficult to secure a large amount of data, and it may take a long time to secure a sufficient amount of data. By using the filtered dataset, which may supplement the feedback dataset, for training, the user device 2000 may increase the accuracy of the copresence estimation model while allowing the feedback to be reflected early.

In an embodiment, the user device 2000 may assign a higher weight to the feedback dataset than the filtered dataset. The user device 2000 may update the copresence estimation model by using the weight such that the feedback data of an insufficient amount is reflected with a higher proportion.

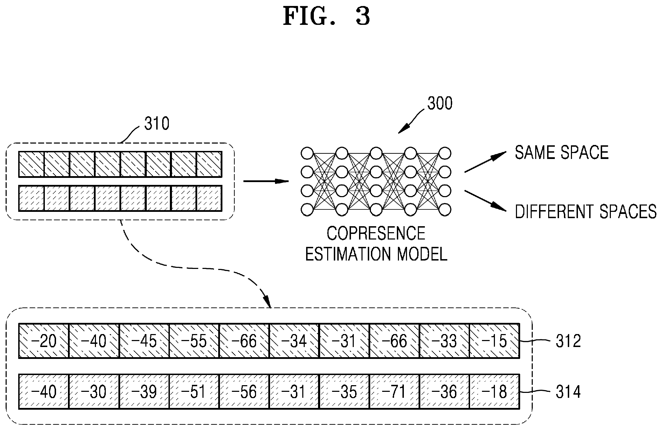

FIG. 3 is a diagram illustrating an operation of a copresence estimation model used by a user device, according to an embodiment of the present disclosure.

In the present disclosure, the term "model" refers to a copresence estimation model 300, unless otherwise stated. The copresence estimation model 300 may be an artificial intelligence model trained to receive input data 310 including pairs of data from two different devices and output a result of estimating whether the two different devices are present in the same space or in different spaces.

Referring to FIG. 3, the user device 2000 may perform an inference operation by inputting the input data 310 into the copresence estimation model 300.

In an embodiment, the input data 310 may include a first Wi-Fi RSSI 312 and a second Wi-Fi RSSI 314. The first Wi-Fi RSSI 312 may correspond to nearby Wi-Fi networks of the user device 2000, and the second Wi-Fi RSSI 314 may correspond to nearby Wi-Fi networks of another device. In the example of FIG. 3, the first Wi-Fi RSSI 312 indicates the strengths of signals received by the user device 2000 from each of ten wireless APs near the user device 2000, and the second Wi-Fi RSSI 314 indicates the strengths of signals received by the other device from each of ten wireless APs near the other device. The user device 2000 may input the input data 310 including the first Wi-Fi RSSI 312 and the second Wi-Fi RSSI 314 into the copresence estimation model 3000 to estimate whether the user device 2000 and the other device are present in the same space. In this case, Wi-Fi RSSIs of each pair used for copresence estimation may be obtained from respective devices in the same time period.

In an embodiment, the copresence estimation model 300 may be implemented using a deep neural network architecture and algorithm of artificial intelligence for performing a classification task, or may be implemented through modification of a known deep neural network architecture and algorithm of artificial intelligence. For example, the copresence estimation model 300 may be implemented through a deep neural network model including one or more multi-layer perceptrons (MLPs) including layers including weights, and may be implemented through a deep neural network model based on a transformer architecture including an attention mechanism, but is not limited thereto.

In an embodiment, the copresence estimation model 300 may be a pre-trained model. The copresence estimation model 300 may be trained using correct data including Wi-Fi RSSI data pairs. The correct data may be annotated with information indicating whether two devices are present in the same space. In this case, a Wi-Fi RSSI data pair labeled as "same space" may be referred to as a positive pair, and a Wi-Fi RSSI data pair labeled as "different spaces" may be referred to as a negative pair.

The term "pre-trained model" may be referred to by various expressions indicating the same or similar concepts. For example, the pre-trained model may be referred to by expressions such as "base model," "pre-fine-tuning model," and "pre-update model," but is not limited to the above-described examples.

In an embodiment, the user device 2000 may generate data for updating the copresence estimation model 300. The user device 2000 may generate a training dataset for personalizing the copresence estimation model 300 by using data collected as the user device operates in the user's space. The user device 2000 may fine-tune the base model by using the training dataset. In other words, the user device 2000 may optimize the copresence estimation model 300 to operate properly in the user's space.

The data for updating the copresence estimation model 300 may include feedback data generated based on user feedback, and filtered data obtained by filtering out high-quality data from pre-collected data. Specific operations, performed by the user device 2000, of generating data for updating the copresence estimation model 300 will be described in detail in the description of the drawings described below.

Further, optimization of the copresence estimation model 300 is intended to improve copresence estimation performance in the user's space. Accordingly, the copresence estimation model 300 after update may be referred to as "optimized model," "personalized model," "customized model," "post-fine-tuning model," "post-update model," etc., and may also be referred to by various expressions indicating the same or similar concepts as the above-described examples.

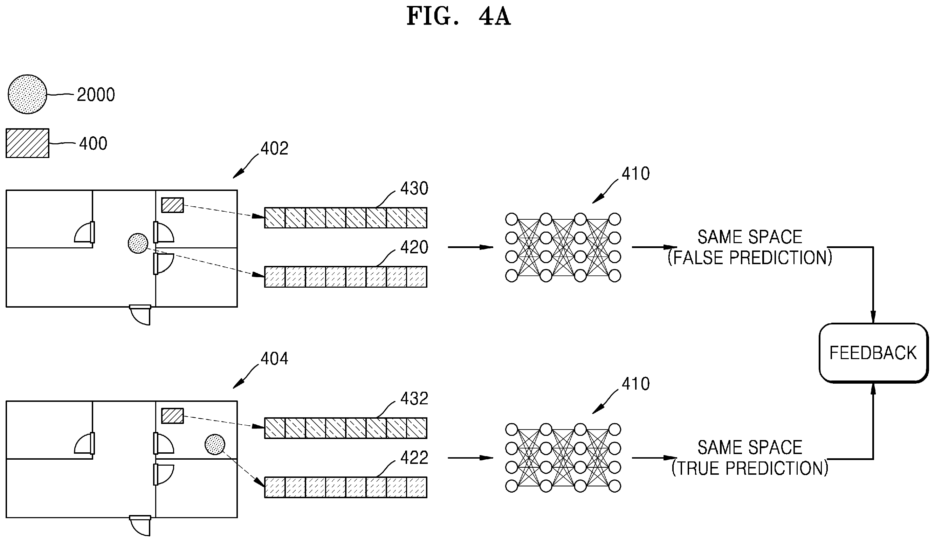

FIG. 4A is a diagram illustrating an operation, performed by a user device, of obtaining feedback on a result of copresence estimation, according to an embodiment of the present disclosure.

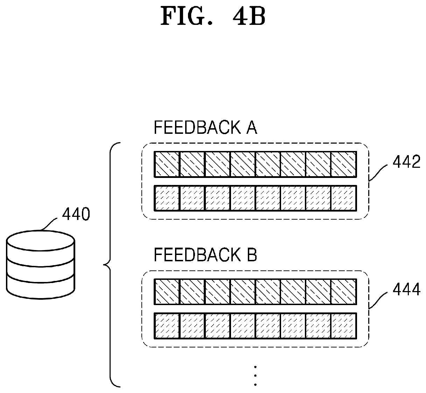

In an embodiment, the user device 2000 may estimate whether each of the plurality of other devices is present in the same space as the user device 2000. FIG. 4B illustrates an example in which, with respect to a device A 400 among the other devices, copresence or non-copresence is estimated and feedback data is generated.

In an embodiment, the user device 2000 may perform a copresence estimation task to infer whether the device A 400 is present in the same space as the user device 2000. The copresence estimation task may be initiated based on a user input for executing a copresence estimation function.

The user device 2000 may estimate whether the device A 400 is present in the same space as the user device 2000 by inputting a Wi-Fi RSSI of the user device 2000 and a Wi-Fi RSSI of the device A 400 into a copresence estimation model 410. The user device 2000 may obtain feedback on a result of the estimation. The feedback may include information indicating that the result of the estimation is inaccurate (or information indicating that the result of the estimation is accurate). In addition, the feedback may include location information of the user device 2000 and/or location information of the device A 400.

Referring to a first example 402, the user device 2000 is present in a different space from the device A 400. The user device 2000 may input, into the copresence estimation model 410, a first Wi-Fi RSSI A 420, which is the Wi-Fi RSSI of the user device 2000, and a second Wi-Fi RSSI A 430, which is the Wi-Fi RSSI of the device A 400. At this time, a result of estimation of the copresence estimation model 410 may be output as "same space." Because the user device 2000 and the device A 400 are present in different spaces, the result of the estimation in the first example 402 is a false prediction.

Referring to a second example 404, the user device 2000 is present in the same space as the device A 400. The user device 2000 may input, into the copresence estimation model 410, a first Wi-Fi RSSI B 422, which is the Wi-Fi RSSI of the user device 2000, and a second Wi-Fi RSSI B 432, which is the Wi-Fi RSSI of the device A 400, and obtain an output of "same space" as a result of estimation. Because the user device 2000 and the device A 400 are present in the same space, the result of the estimation in the second example 404 is a true prediction.

The user device 2000 may obtain feedback on the result of the estimation. The feedback may be obtained in a variety of ways. For example, after the result of the estimation is output, the user device 2000 may receive a user input indicating feedback on the result of the estimation. In addition, for example, the user device 2000 may output the result of the estimation, and output a user interface for requesting feedback on the result of the estimation.

In an embodiment, the feedback may include information indicating that the result of the estimation is inaccurate and/or location information of the user device 2000. When the feedback includes information indicating that the result of the estimation is inaccurate, the user device 2000 may, based on the feedback, configure a negative pair including the Wi-Fi RSSI of the user device 2000 and a Wi-Fi RSSI of a device estimated to be present in the same space as the user device 2000, among the plurality of other devices. The term "negative pair" is a label indicating that two devices are present in different spaces. In addition, when the feedback includes location information of the user device 2000, the user device 2000 may, based on the feedback, configure a positively pair including the Wi-Fi RSSI of the user device 2000 and a Wi-Fi RSSI of a device having location information corresponding to the location information of the user device 2000, among the plurality of other devices. The term "positive pair" is a label indicating that two devices are present in the same space. In this case, the user device 2000 may receive, from the plurality of other devices, location information of the plurality of other devices.

Referring again to the first example 402, the result of the estimation in the first example 402 indicates that the device A 400 is present in the same space as the user device 2000. Because this is a false prediction, the feedback may include information indicating that the result of the estimation is inaccurate. In this case, the user device 2000 may configure, based on the feedback, a negative pair including the first Wi-Fi RSSI A 420, which is the Wi-Fi RSSI of the user device 2000, and the second Wi-Fi RSSI A 430, which is the Wi-Fi RSSI of the device A 400 estimated to be present in the same space as the user device 2000. In addition, the user device 2000 may identify a device having location information corresponding to the location information of the user device 2000, among the other devices excluding the device A 400, and generate a positive pair of the first Wi-Fi RSSI and the second Wi-Fi RSSI.

In an embodiment, the feedback may include information indicating that the result of the estimation is accurate. When the feedback includes information indicating that the result of the estimation is accurate, the user device 2000 may configure, based on the feedback, a positive pair including the Wi-Fi RSSI of the user device 2000 and the Wi-Fi RSSI of another device. For example, when the feedback on the result of the estimation is received in the second example 404, the user device 2000 may configure a positive pair including the first Wi-Fi RSSI B 422, which is the Wi-Fi RSSI of the user device 2000, and the second Wi-Fi RSSI B 432, which is the Wi-Fi RSSI of the device A 400.

FIG. 4B is a diagram illustrating an operation, performed by a user device, of generating feedback data, according to an embodiment of the present disclosure.

In an embodiment, the user device 2000 may generate, based on feedback, a feedback dataset 440 including feedback data including a first Wi-Fi RSSI, and a second Wi-Fi RSSI of another device.

In an embodiment, a plurality of other devices may be provided. For example, the plurality of other devices may include a device A and a device B. Feedback data A 442 may be obtained based on feedback on a result of estimating copresence or non-copresence between the user device 2000 and the device A. In this case, the feedback data A 442 may include {first Wi-Fi RSSI A, second Wi-Fi RSSI A} of the user device 2000 and the device A, and feedback information. Similarly, feedback B may include {first Wi-Fi RSSI B, second Wi-Fi RSSI B} of the user device 2000 and the device B, and feedback information.

The user device 2000 may generate the feedback dataset 440 in which the first Wi-Fi RSSI and each of the plurality of second Wi-Fi RSSIs are matched in pairs. In this regard, when the user device 2000 estimates copresence or non-copresence between the user device 2000 and each of the plurality of other devices, feedback may be received for only some of results of estimation for the plurality of other devices. In this case, the user device 2000 may include, in the feedback dataset 440, only data corresponding to the feedback. For example, feedback on a result of estimating copresence or non-copresnece between the user device 2000 and the device A and a feedback on a result of estimating copresence or non-copresnece between the user device 2000 and the device B may be obtained, whereas feedback on a result of estimating copresence or non-copresnece between the user device 2000 and a device C may not be obtained. In this case, the feedback dataset 440 may only include the feedback data A 442 and the feedback data B 444, which correspond to devices for which feedback is obtained by the user device 2000.

FIG. 5A is a diagram illustrating data collection operations of a user device and another device, according to an embodiment of the present disclosure.

In the description of FIG. 5A and FIG. 5B, it is assumed that a plurality of devices corresponding to a second Wi-Fi RSSI are located in different spaces from each other. FIG. 5A illustrates a specific example in which a device A is in a room A, a device B is in a living room, a device C is in a room B, and a device D is in a room C.

In an embodiment, the user device 2000 may continuously collect a first Wi-Fi RSSI corresponding to nearby Wi-Fi networks of the user device 2000. The user device 2000 may store the first Wi-Fi RSSI periodically or aperiodically. The first Wi-Fi RSSI stored through continuous collection may be referred to as a "pre-collected first Wi-Fi RSSI 510."

In addition, each of the other devices may continuously collect a second Wi-Fi RSSI corresponding to nearby Wi-Fi networks of each device. The second Wi-Fi RSSI stored through continuous collection may be referred to as a "pre-collected second Wi-Fi RSSI 520." The pre-collected second Wi-Fi RSSI 520 may include second Wi-Fi RSSIs of the plurality of other devices. For example, the pre-collected second Wi-Fi RSSI 520 may include a second Wi-Fi RSSI 522 of the device A, a second Wi-Fi RSSI 524 of the device B, ..., etc.

In an embodiment, the user device 2000 may receive the pre-collected second Wi-Fi RSSI 520 from the other devices. The user device 2000 may generate a raw dataset 530 including pairs of {first Wi-Fi RSSI, second Wi-Fi RSSI} by matching the pre-collected first Wi-Fi RSSI 510 with the pre-collected second Wi-Fi RSSI 520. The user device 2000 may filter out bad data from the raw dataset 530 based on preset conditions and leave only good data. An operation, performed by the user device 2000, of filtering data will be further described with reference to FIG. 5B.

FIG. 5B is a diagram illustrating an operation, performed by a user device, of generating a filtered dataset, according to an embodiment of the present disclosure.

In an embodiment, the user device 2000 may generate a filtered dataset 540 by filtering the pre-collected first Wi-Fi RSSI 510 and a plurality of pre-collected second Wi-Fi RSSIs 520 according to preset conditions.

The user device 2000 may perform an inference operation of a copresence estimation model by applying the pre-collected first Wi-Fi RSSI 510 and the plurality of pre-collected second Wi-Fi RSSIs 520 as input data to the copresence estimation model. For example, the user device 2000 may estimate whether the device A is present in the same space as the user device 2000 by applying the pre-collected first Wi-Fi RSSI 510 and the pre-collected second Wi-Fi RSSI 522 of the device A to the copresence estimation model. In addition, the user device 2000 may estimate whether the device B is present in the same space as the user device 2000 by using the pre-collected first Wi-Fi RSSI 510 and the pre-collected second Wi-Fi RSSI 524 of the device B, and may estimate whether the device C is present in the same space as the user device 2000 by using the pre-collected first Wi-Fi RSSI 510 and a pre-collected second Wi-Fi RSSI 526 of the device C.

The user device 2000 may filter data based on a result of the estimation of the copresence estimation model. The user device 2000 may determine, based on the number of devices estimated to be present in the same space as the user device 2000, among the plurality of other devices, whether to filter the pre-collected first Wi-Fi RSSI and the plurality of pre-collected second Wi-Fi RSSIs.

In an embodiment, the preset conditions for determining whether to filter data after the user device 2000 performs copresence estimation for the plurality of other devices may be as follows.

When the number of devices estimated to be present in the same space as the user device 2000 among the other devices is 1, the user device 2000 may configure a positive pair including the first Wi-Fi RSSI and a second Wi-Fi RSSI of a device estimated to be present in the same space as the user device 2000, configure a negative pair including the first Wi-Fi RSSI and a second Wi-Fi RSSI of the remaining devices, and include the positive and negative pairs in the filtered dataset 540.

When the number of devices estimated to be present in the same space as the user device 2000 among the other devices is 2 or more, the user device 2000 may classify the estimation as a potential false case, and include the first Wi-Fi RSSI and the second Wi-Fi RSSI used for inference in a preliminary dataset 560.

When the number of devices estimated to be present in the same space as the user device 2000 among the other devices is 0, the user device 2000 may filter the first Wi-Fi RSSI and the second Wi-Fi RSSI used for inference.

For example, referring to a first example 552 of the result of the estimation, the result of the estimation indicates that the user device 2000 is present in the same space as the device A and in a different space from the device B and the device C. In this case, because the device A, the device B, and the device C are in different spaces from each other, data of the result of the estimation in the first example 552 is good data that is reliable. That is, the user device 2000 is present in the same space as the device A and in a different space from the device B and the device C, and the inference of the copresence estimation model is accurate. Accordingly, the user device 2000 may configure a positive pair including the first Wi-Fi RSSI and the second Wi-Fi RSSI corresponding to the device A, configure negative pairs including the first Wi-Fi RSSI and the second Wi-Fi RSSI corresponding to the device B, and the first Wi-Fi RSSI and the second Wi-Fi RSSI corresponding to the device C, respectively, and include good data pairs in the filtered dataset 540.

In addition, for example, referring to a second example 554 of the result of the estimation, the result of the estimation indicates that the user device 2000 is present in the same space as the device A and the device B and in a different space from the device C. In this case, because the device A, the device B, and the device C are in different spaces from each other, data of the result of the estimation in the second example 554 includes an error, which indicates a potential error that may occur in the user's actual usage environment. In this case, the user device 2000 may include the first Wi-Fi RSSI and the second Wi-Fi RSSI used for inference in the preliminary dataset 560. In an embodiment, as the user device 2000 updates the copresence estimation model, the performance of the copresence estimation model may be improved. Accordingly, at a certain time point after continuous updates, the data included in the preliminary dataset 560 may also become good data that may be used to update the copresence estimation model. After the copresence estimation model is updated, the user device 2000 may reexamine the data in the preliminary dataset 560. The user device 2000 may perform a copresence estimation task by using the data in the preliminary dataset 560. In this case, when the number of devices estimated to be present in the same space as the user device 2000 among the other devices is 1, the user device 2000 may include the first Wi-Fi RSSI and the second Wi-Fi RSSI used for inference in the filtered dataset 540.

In addition, for example, referring to a third example 554 of the result of the estimation, the result of the estimation indicates that the user device 2000 is present in a different space from the device A, the device B, and the device C. That is, when no devices are estimated to be present in the same space as in the third example 554, the user device 2000 does not use the first Wi-Fi RSSI and the second Wi-Fi RSSI used for inference to update the copresence estimation model.

By generating the filtered dataset 540, the user device 2000 may secure a positive pair of the first Wi-Fi RSSI and the second Wi-Fi RSSI that may be used for fine-tuning the copresence estimation model. The user device 2000 may update the copresence estimation model by using the filtered dataset 540, thereby improving the performance of a space estimation model for the user space.

In this regard, although FIG. 5B illustrates an example in which three devices other than the user device 2000 are provided, the number of other devices is not limited thereto. In other words, two or more other devices may be provided. When the number of devices estimated to be present in the same space as the user device among the devices is 1, the user device 2000 may secure a positive pair of the first Wi-Fi RSSI and the second Wi-Fi RSSI.

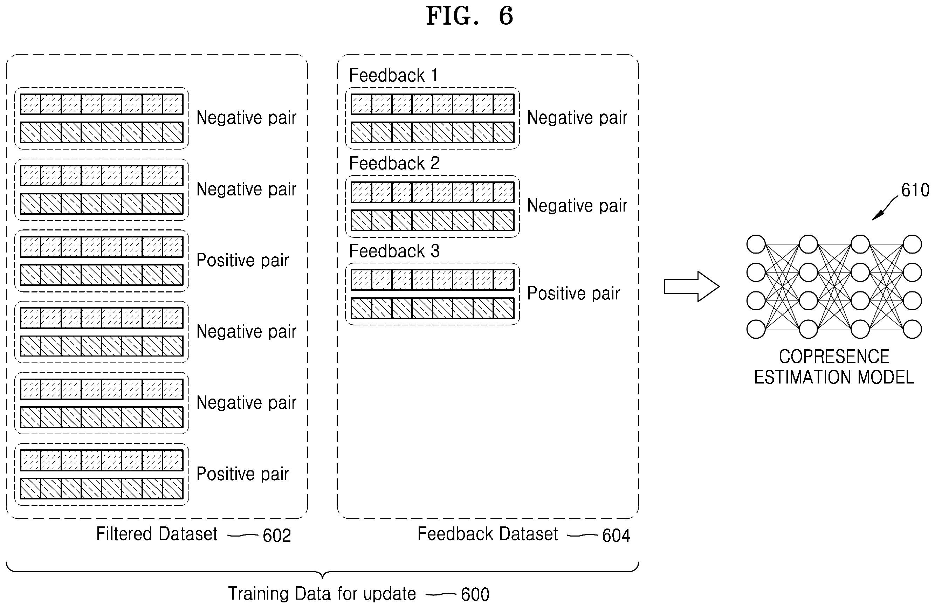

FIG. 6 is a diagram illustrating a training dataset generated by a user device, according to an embodiment of the present disclosure.

In an embodiment, the user device 2000 may generate a training dataset 600. The user device 2000 may fine-tune a copresence estimation model 610 by using the training dataset 600.

The training dataset 600 may include a filtered dataset 602 and a feedback dataset 604.

The filtered dataset 602 may include {first Wi-Fi RSSI, second Wi-Fi RSSI} data pairs filtered according to preset conditions, among pre-collected Wi-Fi RSSIs. A data pair may be a positive pair indicating the same space, or a negative pair indicating different spaces. An operation, performed by the user device 2000, of generating the filtered dataset 602 has been described above in the description of FIGS. 5A and 5B, and thus, a repeated description thereof will be omitted.

The feedback dataset 604 may include {first Wi-Fi RSSI, second Wi-Fi RSSI} data pairs generated based on feedback. A data pair may be a positive pair indicating the same space, or a negative pair indicating different spaces. An operation, performed by the user device 2000, of generating the feedback dataset 604 has been described above in the description of FIGS. 4A and 4B, and thus, a repeated description thereof will be omitted.

In order for the user device 2000 to fine-tune the copresence estimation model 610, a sufficient amount of data is required in the training dataset 600. However, feedback data, which is high-quality data that may be used for training, is collected as the user device 2000 is used, and thus, the amount of such data is smaller than that of continuously collected data, and collecting a sufficient amount of the data requires a significant amount of time. In addition to the feedback data, the user device 2000 may continuously filter pre-collected data and include the filtered data in the training dataset 600, thereby enabling the feedback data to be quickly reflected in the copresence estimation model 610.

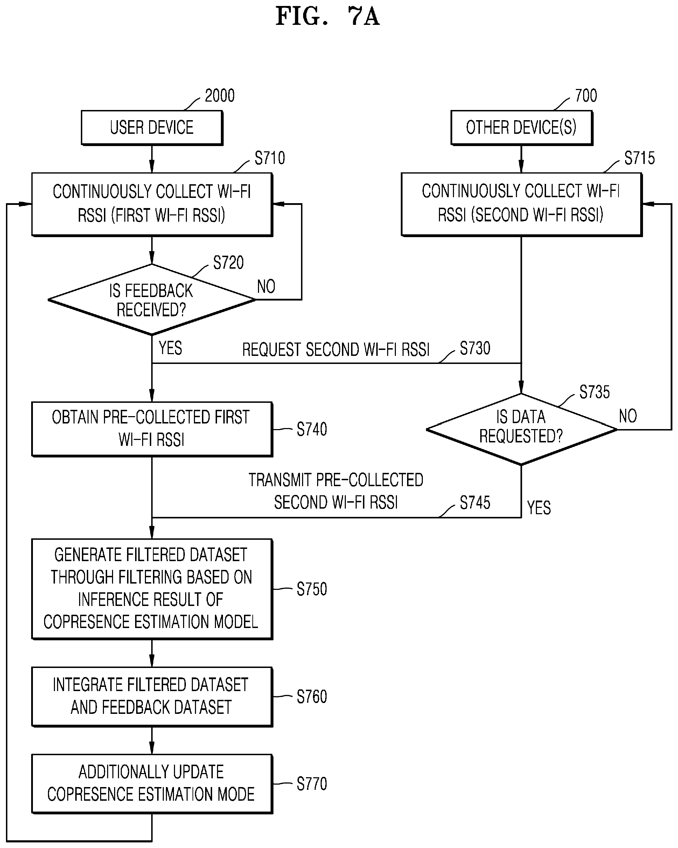

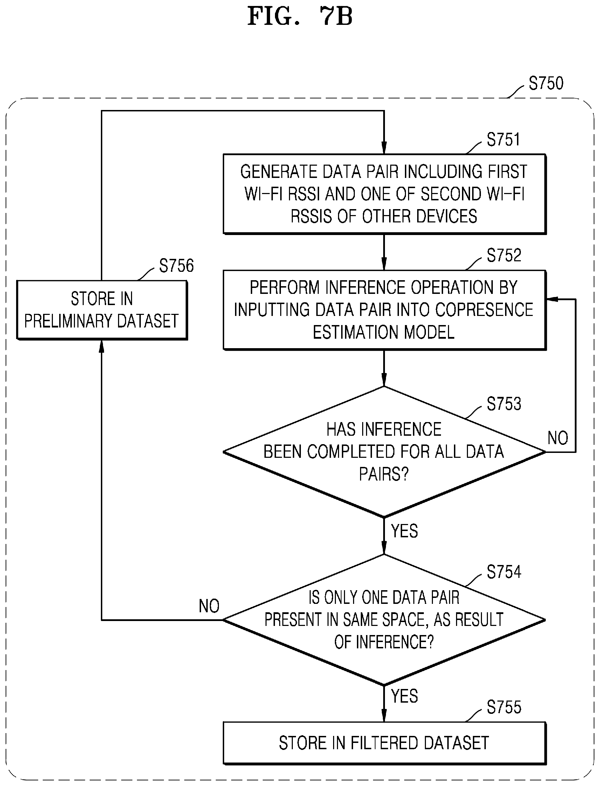

In an embodiment, an operation, performed by the user device 2000, of generating the training dataset 600 may be initiated based on feedback being received by the user device 2000. For example, after the user uses the user device 2000 to estimate whether another device is present in the same space as the user device, feedback on a result of the estimation may be received from the user. In this case, in response to receiving the feedback, the user device 2000 may generate the training dataset 600 including the feedback dataset 604 and the filtered dataset 602, and update the copresence estimation model. This aspect will be further described with reference to FIGS. 7A and 7B.

FIG. 7A is a flowchart illustrating an operating method of a user device when receiving feedback, according to an embodiment of the present disclosure.

In operation S710, the user device 2000 may continuously collect and store a Wi-Fi RSSI (first Wi-Fi RSSI). The first Wi-Fi RSSI may be collected periodically or aperiodically when the user device 2000 is in a standby state or an active state.

In operation S715, another device 700 may continuously collect and store a Wi-Fi RSSI (second Wi-Fi RSSI). There may be one or more other devices 700. The second Wi-Fi RSSI may be collected periodically or aperiodically when the other device 700 is in a standby state or an active state. When a plurality of other devices 700 are provided, each device may continuously collect a Wi-Fi RSSI. For example, a device A and a device B, which are different from each other, may each continuously collect a second Wi-Fi RSSI representing nearby Wi-Fi networks.

In operation S720, the user device 2000 may identify that feedback is received.

In an embodiment, operations S210 to S230 of FIG. 2 may be performed before operation S720 is performed. In other words, the user device 2000 may estimate whether the other device 700 is present in the same space as the user device 2000 by inputting the first Wi-Fi RSSI of the user device 2000 and the second Wi-Fi RSSI of the other device 700 into a copresence estimation model. The user device 2000 may receive a user input for inputting feedback on a result of the estimation. When no feedback is received, the user device 2000 performs operation S710 again. When feedback is received, the user device 2000 may perform operations S730 and S740.

In an embodiment, when feedback is received, the user device 2000 may generate a feedback dataset based on the feedback. The feedback dataset may include feedback data including at least one {first Wi-Fi RSSI, second Wi-Fi RSSI}.

In operation S730, based on the feedback being received, the user device 2000 may request the second Wi-Fi RSSI from the other device 700. When a plurality of other devices 700 are provided, the user device 2000 may request the second Wi-Fi RSSI from each of the plurality of other devices 700.

In operation S735, the other device 700 may identify a data request from the user device 2000. When no data request is identified, the other device 700 performs operation S715 again. When a data request is identified, the other device 700 may transmit a pre-collected second Wi-Fi RSSI to the user device 2000 (operation S745). The pre-collected second Wi-Fi RSSI may be collected in operation S715.

In operation S740, the user device 2000 may obtain a pre-collected first Wi-Fi RSSI. The pre-collected first Wi-Fi RSSI may be collected in operation S710.

In operation S750, the user device 2000 may generate a filtered dataset through filtering based on a result of inference of the copresence estimation model. The user device 2000 may generate the filtered dataset by filtering the pre-collected first Wi-Fi RSSI and the pre-collected second Wi-Fi RSSI. Specific operations included in operation S750 will be further described with reference to FIG. 7B.

In operation S760, the user device 2000 may integrate the filtered dataset and the feedback dataset. The user device 2000 may generate a training dataset including the filtered dataset and the feedback dataset.

In operation S770, the user device 2000 may additionally update the copresence estimation model. The user device 2000 may fine-tune the copresence estimation model by using the newly generated training dataset, thereby optimizing the space estimation model to suit the user's space. After updating the copresence estimation model, the user device 2000 may perform operation S710 again to collect a first Wi-Fi RSSI. When feedback is received again thereafter, the user device 2000 may perform operations S720 to S770 to update the copresence estimation model again.

In an embodiment, the user device 2000 may repeatedly generate a training dataset and update the copresence estimation model each time feedback is received.

In an embodiment, the user device 2000 may repeatedly generate a training dataset and update the copresence estimation model, based on preset conditions. For example, the user device 2000 may update the copresence estimation model whenever feedback is received a preset number N of times. However, the preset conditions are not limited thereto, and various conditions triggered by the reception of feedback may be defined as the preset conditions.

FIG. 7B is a flowchart illustrating an operation of FIG. 7A in more detail.

Operations S751 to S756 of FIG. 7B describe detailed operations of operation S750 of FIG. 7A. Therefore, operations S710 to S740 of FIG. 7A may be performed before operation S751 is performed.

In operation S751, the user device 2000 generates a data pair including the first Wi-Fi RSSI and one of the second Wi-Fi RSSIs of the other devices.

The user device 2000 may obtain a pre-collected first Wi-Fi RSSI and pre-collected second Wi-Fi RSSIs of the other devices, and generate a data pair of the first Wi-Fi RSSI and the second Wi-Fi RSSI. For example, the user device 2000 may generate a data pair {first Wi-Fi RSSI, second Wi-Fi RSSI A} in which the Wi-Fi RSSI of the user device 2000 and the Wi-Fi RSSI of the device A are matched, and generate a data pair {first Wi-Fi RSSI, second Wi-Fi RSSI B} in which the Wi-Fi RSSI of the user device 2000 and the Wi-Fi RSSI of the device B are matched.

In operation S752, the user device 2000 may perform an inference operation by inputting the data pair into the copresence estimation model. For example, the user device 2000 may input the data pair {first Wi-Fi RSSI, second Wi-Fi RSSI A} into the copresence estimation model to perform an inference operation to estimate whether the device A is present in the same space as the user device 2000.

In operation S753, the user device 2000 checks whether inference has been completed for all data pairs. For example, inference may have been performed for the data pair {first Wi-Fi RSSI, second Wi-Fi RSSI A}, but inference may not have been performed for the data pair {first Wi-Fi RSSI, second Wi-Fi RSSI B}. In this case, the user device 2000 may perform operation S752 again to estimate whether the device B is present in the same space as the user device 2000. The user device 2000 may repeat operation S752 until the inference operation is completed for all other devices. When inference is completed for all data pairs and results of copresence estimation for all other devices are obtained, the user device 2000 may perform operation S754.

In operation S754, as a result of inference, the user device 2000 may identify whether only one data pair is present in the same space. When only one data pair is present in the same space, the user device 2000 may perform operation S755 to store the data pairs used for inference in the filtered dataset. For example, as a result of inference, the device A may be estimated to be present in the same space as the user device 2000, and the device B may be estimated to be present in a different space from the user device 2000. In this case, the user device 2000 may include the data pairs used for inference in the filtered dataset. In other cases, the user device 2000 may perform operation S756 to store the data pairs used for inference in a preliminary dataset. For example, both the device A and the device B may be estimated to be present in the same space as the user device 2000. In this case, the user device 2000 may filter the data pairs used for inference and include the filtered data pairs in the preliminary dataset. The data pairs included in the preliminary dataset are not used directly to update the current copresence estimation model, but may be used to update the copresence estimation model in the future. For example, after the copresence estimation model is updated, the user device 2000 may perform a copresence estimation task by using the data pairs included in the preliminary dataset. In this case, when the number of devices estimated to be present in the same space as the user device 2000 is 1, the user device 2000 may include the data pairs used for inference in the filtered dataset.

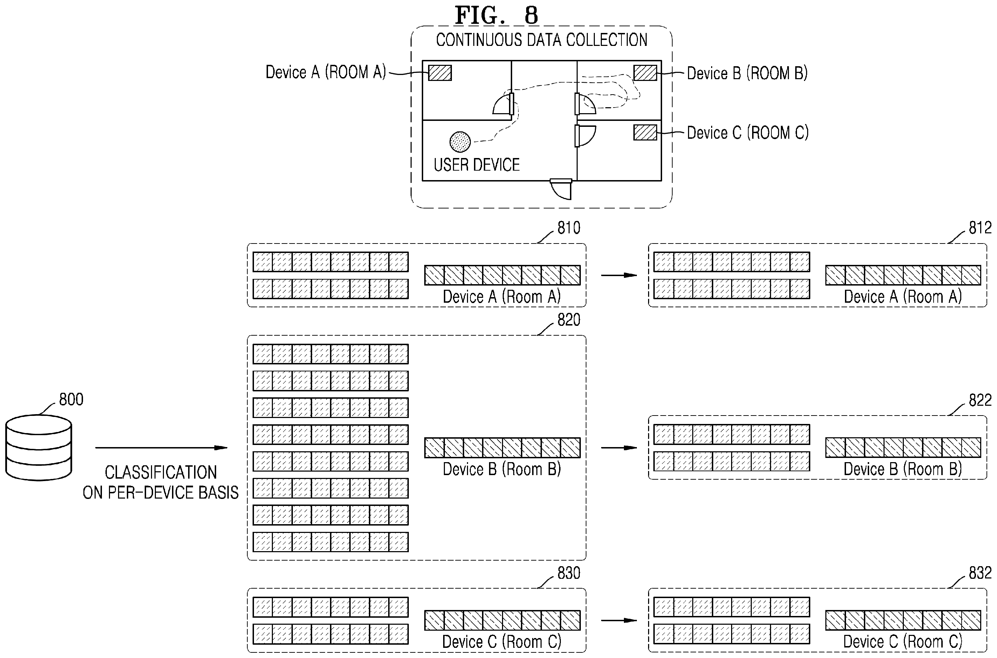

FIG. 8 is a diagram illustrating an operation, performed by a user device, of generating a training dataset, according to an embodiment of the present disclosure.

In the description of FIG. 8, an example is described in which a device A is present in a room A, a device B is present in a room C, a device C is present in a room C, and the user device 2000 is a mobile device.

When the user device 2000 is a mobile device, the amount of collected data may vary for each device. For example, when the user device 2000 is present in the room B for a long time, a relatively large number of data pairs of the user device 2000 and the device B may be collected. Accordingly, even in a filtered dataset 800, which is generated by the user device 2000 by filtering a pre-collected first Wi-Fi RSSI of the user device 2000 and a pre-collected second Wi-Fi RSSI according to preset conditions, there may be variations in the amount of data for each device. The user device 2000 may sample data of the filtered dataset 800 to reduce data variation within a training dataset when updating the copresence estimation model.

In an embodiment, the user device 2000 may classify, on a per-device basis, a plurality of second Wi-Fi RSSIs are matched with a first Wi-Fi RSSI of the user device. For example, the user device 2000 may classify the data pairs included in the filtered dataset 800 into a dataset 810 of the device A, a dataset 820 of the device B, and a dataset 830 of the device C. As a result of the classification, the dataset 810 of the device A may include data pairs in which the first Wi-Fi RSSI of the user device 2000 and the second Wi-Fi RSSI of the device A are matched, the dataset 820 of the device B may include data pairs in which the first Wi-Fi RSSI of the user device 2000 and the second Wi-Fi RSSI of the device B are matched, and the dataset 830 of the device C may include data pairs in which the first Wi-Fi RSSI of the user device 2000 and the second Wi-Fi RSSI of the device C are matched.

The user device 2000 may sample, based on a classification result, data pairs to be included in the filtered dataset. For example, the user device 2000 may sample data based on a median value of the numbers of data pairs matched on a per-device basis. Specifically, when the dataset 810 of the device A includes two data pairs, the dataset 820 of the device B includes eight data pairs, and the dataset 830 of the device C includes one data pair, the user device 2000 may set the median value, 2, as the sampling number. Accordingly, a sampled dataset 812 of the device A and a sampled dataset 822 of the device B each include two data pairs, and a sampled dataset 832 of the device C includes one data pair. Because the dataset 830 of the device C includes fewer data pairs than the sampling number, all data is used. In this regard, the standard by which the user device 2000 samples data is not limited to the median value of the numbers of data pairs. For example, an average value, a preset value, etc. may be used.

By sampling the data pairs included in the filtered dataset 800, the user device 2000 may reduce the variations in the data included in the filtered dataset 800. The filtered dataset 800 may be integrated with a feedback dataset to generate a training dataset for updating the copresence estimation model.

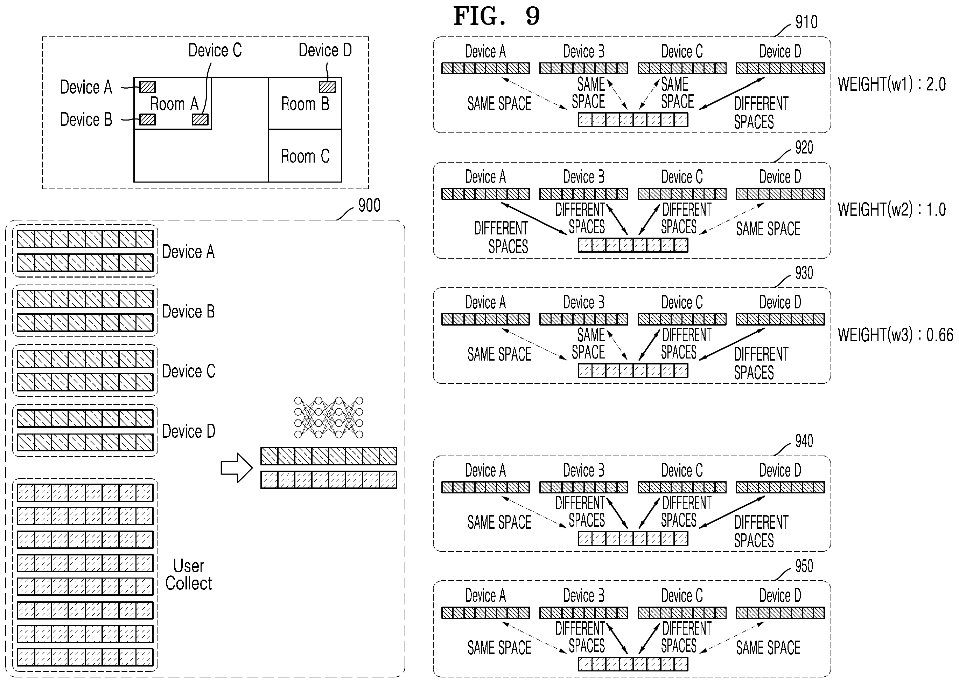

FIG. 9 is a diagram illustrating an operation, performed by a user device, of generating a training dataset, according to an embodiment of the present disclosure.

In an embodiment, the user device 2000 may generate a filtered dataset by filtering a pre-collected first Wi-Fi RSSI and a plurality of pre-collected second Wi-Fi RSSIs according to preset conditions. In this case, unlike in the example of FIG. 5B, two or more other devices may be present in the same space. For example, FIG. 9 illustrates an example in which a device A, a device B, and a device C are in a room A, a device D is present in a room B, and the user device 2000 is a mobile device.

In an embodiment, the user device 2000 may perform an inference operation 900 of a copresence estimation model by applying the pre-collected first Wi-Fi RSSI and the plurality of pre-collected second Wi-Fi RSSIs as input data to the copresence estimation model.

For example, the user device 2000 may estimate whether the device A is present in the same space as the user device 2000 by applying the pre-collected first Wi-Fi RSSI and the pre-collected second Wi-Fi RSSI of the device A to the copresence estimation model. In addition, the user device 2000 may estimate whether the device B, the device C, and the device D are present in the same space as the user device 2000 by using the pre-collected first Wi-Fi RSSI and the pre-collected second Wi-Fi RSSI of each of the device B, the device C, and the device D.

The user device 2000 may filter data based on a result of the estimation of the copresence estimation model. When two or more of the plurality of other devices are present in one space, the user device 2000 may determine whether to filter the pre-collected first Wi-Fi RSSI and the pre-collected second Wi-Fi RSSI, based on information of the plurality of other devices and the number of devices estimated to be present in the same space as the user device 2000.

For example, device information of the plurality of other devices, that is, the device A, the device B, and the device C, may include information indicating that the devices are in the room A.

Referring to a first example 910 of the result of the estimation, the result of the estimation in the first example 910 indicates that the user device 2000 is present in the same space as the device A, the device B, and the device C and in a different space from the device D. In this case, because there is information indicating that the device A, the device B, and the device C are present in the same space as each other, data of the result of the estimation in the first example 910 is good data that is reliable. That is, the user device 2000 is present in the same space as the device A, the device B, and the device C and in a different space from the device D, and the inference of the copresence estimation model is accurate. Accordingly, the user device 2000 may include, in the filtered dataset, the {first Wi-Fi RSSI, second Wi-Fi RSSI} data pairs used for the inference in the first example 910.

Referring to a second example 920 of the result of the estimation, the result of the estimation in the second example 920 indicates that the user device 2000 is present in a different space from the device A, the device B, and the device C and in the same space as the device D. In this case, because there is information indicating that the device A, the device B, and the device C are present in the same space as each other, data of the result of the estimation in the second example 920 is good data that is reliable. That is, the user device 2000 is present in a different space from the device A, the device B, and the device C and in the same space as the device D, and the inference of the copresence estimation model is accurate. Accordingly, the user device 2000 may include, in the filtered dataset, the {first Wi-Fi RSSI, second Wi-Fi RSSI} data pairs used for the inference in the second example 920.

Referring to a third example 930 of the result of the estimation, the result of the estimation in the third example 930 indicates that the user device 2000 is present in the same space as the device A and the device B and in a different space from the device C and the device D. In this case, because there is information indicating that the device A, the device B, and the device C are present in the same space as each other, data of the result of the estimation in the third example 930 is data that accurately estimates more than a majority (2 out of 3). Accordingly, the user device 2000 may include, in the filtered dataset, the {first Wi-Fi RSSI, second Wi-Fi RSSI} data pairs used for the inference in the third example 930.

Referring to a fourth example 940 and a fifth example 950 of the result of the estimation, data of the result of the estimation in the fourth example 940 is data that accurately estimates less than a majority (1 out of 3), and data of the result of the estimation in the fifth example 950 estimates that the device A and the device D, which are present in different spaces, are present in the same space and thus is regarded as unusable data. Therefore, the data pairs used in the inference in the fourth example 940 and the fifth example 950 may not be included in the filtered dataset.

In an embodiment, when the number of devices located in the same space among the other devices is 2 or more, the user device 2000 may assign a weight for sampling to a first Wi-Fi RSSI-second Wi-Fi RSSI pair, based on the result of the estimation of the copresence estimation model.

For example, referring to the first example 910 of the result of the estimation, the result of the estimation in the first example 910 is an accurate result of estimation, and there are three positive pairs in which the user device 2000 is inferred to be present in the same space as the device A, the device B, and the device C, respectively. Accordingly, the user device 2000 may assign a first weight (e.g., 2), which is a relatively high weight, to the {first Wi-Fi RSSI, second Wi-Fi RSSI} data pairs used in the inference in the first example 910.

For example, referring to the second example 920 of the result of the estimation, the result of the estimation in the second example 920 is an accurate result of estimation, and there is one positive pair in which the user device 2000 is inferred to be present in the same space as the device D. Accordingly, the user device 2000 may assign a second weight (e.g., 1), which is lower than the first weight, to the {first Wi-Fi RSSI, second Wi-Fi RSSI} data pairs used in the inference in the second example 920.

For example, referring to the third example 930 of the result of the estimation, the result of the estimation in the third example 930 is a result that accurately estimates more than a majority (2 out of 3). In this case, because the result of the estimation is not entirely accurate, the user device 2000 may assign a third weight (e.g., 0.66), which is lower than the first weight and the second weight, to the {first Wi-Fi RSSI, second Wi-Fi RSSI} data pairs used in the inference in the third example 930.

In an embodiment, weights may be used when the user device 2000 generates a filtered dataset. For example, the user device 2000 may sample data based on the weights. Specifically, the user device 2000 may sort data pairs in an order of weights and sample N data pairs with a high weight to configure a filtered dataset. Alternatively, the user device 2000 may configure a filtered dataset by sampling data pairs in proportion to weights.

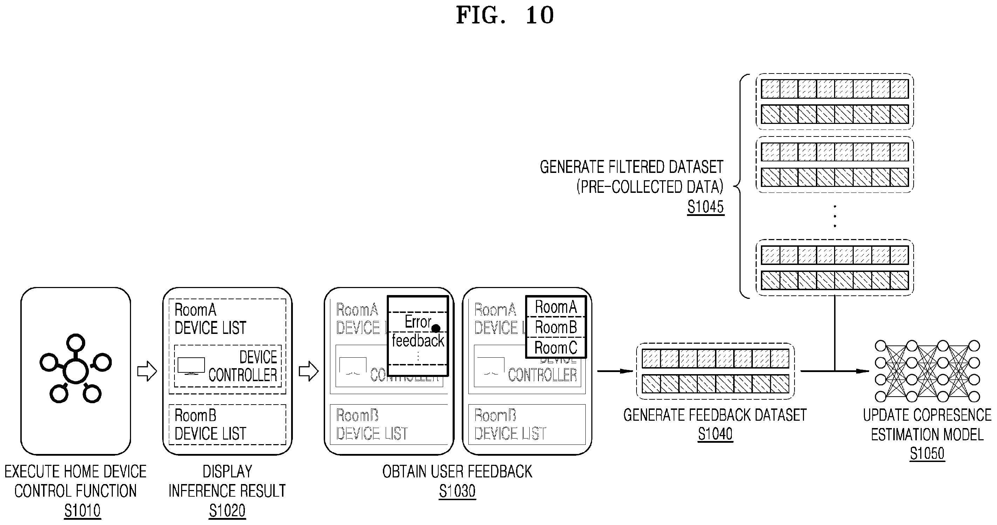

FIG. 10 is a diagram illustrating an operation, performed by a user device, of using a copresence estimation model, according to an embodiment of the present disclosure.

In an embodiment, the user device 2000 may control a plurality of other devices. For example, the user device 2000 may interact with other devices within the user's home. The other devices within the home and the user device 2000 may be communicatively connected to each other. For example, the user device 2000 and the other devices may be connected to a home network or to a server (e.g., a cloud server).

In operation S1010, the user device 2000 may execute a home device control function. The user device 2000 may receive a user input for executing the home device control function. The home device control function may be provided through an application 1010. For example, a plurality of home devices registered in a smart home application may be controlled through the application.

In operation S1020, the user device 2000 may display a result of inference obtained by using a copresence estimation model. The user device 2000 may estimate a device present in the same space as the current location of the user device 2000, and display a result of the estimation on the screen. For example, the user device 2000 may display a device identified as being present in the same space as the user device 2000, and information of the device. For example, when a device identified as being present in the same space as the user is a device A, and information of the device A is registered as indicating that the device is present in a room A, the user device 2000 may display, on the screen, the device inferred to be present in the same space as the user. Based on a user input for selecting another device displayed on the screen, the user device 2000 may control an operation of the other device. For example, when the other device is a TV, operations such as turning the TV on/off, changing channels, adjusting the volume, and running applications may be performed through the user device 2000.

In operation S1030, the user device 2000 may obtain user feedback. In an embodiment, the result of the inference obtained by using the copresence estimation model in operation S1020 may not be accurate. In this case, the user may input feedback into the user device 2000. For example, the user device 2000 may provide a user interface that may evaluate the accuracy/inaccuracy of the result of the inference. The user device 2000 may store feedback information based on a user input. In an embodiment, the user device 2000 may receive, from the user, a user input for inputting location information of a device.

In operation S1040, the user device 2000 may generate a feedback dataset. An operation, performed by the user device 2000, of generating a feedback dataset has been described above in the description of the previous drawings, and thus, a repeated description thereof will be omitted for brevity.

In operation S1045, the user device 2000 may generate a filtered dataset. The filtered dataset may be generated by filtering pre-collected Wi-Fi RSSI data. An operation, performed by the user device 2000, of generating a filtered dataset has been described above in the description of the previous drawings, and thus, a repeated description thereof will be omitted for brevity.

In operation S1050, the user device 2000 may update the copresence estimation model. The user device 2000 may fine-tune the copresence estimation model by using a training dataset including the feedback dataset and the filtered dataset. An operation, performed by the user device 2000, of updating a copresence estimation model has been described above in the description of the previous drawings, and thus, a repeated description thereof will be omitted for brevity.

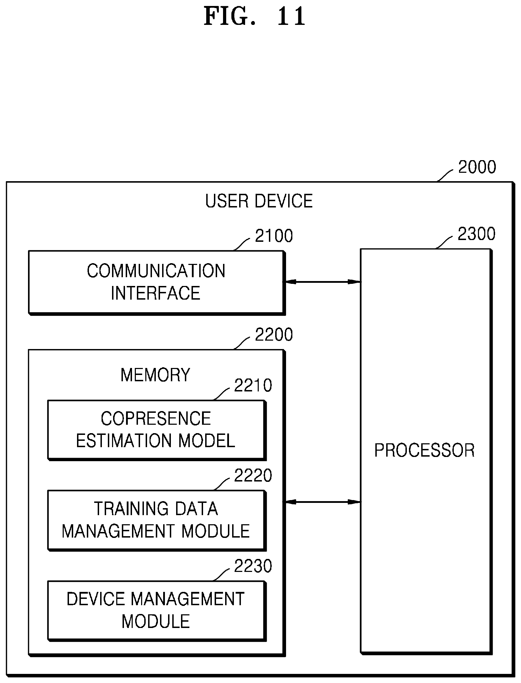

FIG. 11 is a block diagram illustrating a configuration of a user device according to an embodiment of the present disclosure.

In an embodiment, the user device 2000 may include a communication interface 2100, memory 2200, and a processor 2300.

The communication interface 2100 may include communication circuitry. The communication interface 2100 may use at least one of data communication methods including, for example, wired LAN, wireless LAN, Wi-Fi, Bluetooth, ZigBee, Wi-Fi Direct (WFD), Infrared Data Association (IrDA), Bluetooth Low Energy (BLE), Near Field Communication (NFC), Wireless Broadband Internet (WiBro), World Interoperability for Microwave Access (WiMAX), Shared Wireless Access Protocol (SWAP), Wireless Gigabit Alliances (WiGig), and RF communication. The communication interface 2100 may be implemented to include a plurality of modules (e.g., a Wi-Fi module, etc.) for implementing the above-described communication methods.

The communication interface 2100 may transmit and receive, to and from other devices, data for performing an operation of the user device 2000. For example, the user device 2000 may transmit and receive, to and from the other devices through the communication interface 2100, various data (device information and Wi-Fi RSSI information) used by the user device 2000 to interact with the other devices.

The memory 2200 may store instructions, data structures, and program code that are readable by the processor 2300. There may be one or more memories 2200. In the disclosed embodiments, operations performed by the processor 2300 may be implemented by executing instructions or code of a program stored in the memory 2200.

The memory 2200 may include non-volatile memory such as read-only memory (ROM) (e.g., programmable read-only memory (PROM), erasable programmable read-only memory (EPROM), or electrically erasable programmable read-only memory (EEPROM)), flash memory (e.g., a memory card or a solid-state drive (SSD)), and analog recording type (e.g., a hard disk drive (HDD), a magnetic tape, or an optical disk), and volatile memory such as random-access memory (RAM) (e.g., dynamic random-access memory (DRAM) or static random-access memory (SRAM)).

The memory may store data, instructions, and programs that enable the user device 2000 to operate. For example, the memory 2200 may store a copresence estimation module 2210, a training data management module 2220, and a device management module 2230.

The processor 2300 may control overall operations of the user device 2000. For example, the processor 2300 may control the overall operations of the user device 2000 by executing one or more instructions of a program stored in the memory 2200. There may be one or more processors 2300.

The processor 2300 can estimate whether the user device 2000 and another device are present in the same space by executing the copresence estimation module 2210. The copresence estimation module 2210 may include a copresence estimation model, and data and code for operating the copresence estimation model. Operations, performed by the user device 2000, of using a copresence estimation model have been described above, and thus, a repeated description thereof will be omitted for brevity.

The processor 2300 may generate a training dataset by executing the training data management module 2220. The training data management module may collect a Wi-Fi RSSI of the user device 2000 and Wi-Fi RSSIs of the other devices. The training data management module 2220 may generate a feedback dataset based on feedback received from the user. In addition, the training data management module 2220 may continuously filter pre-collected data to generate a filtered dataset. When the filtered dataset is generated, the copresence estimation module 2210 may be used to obtain inference data of the pre-collected data. Operations, performed by the user device 2000, of generating training data have been described above, and thus, a repeated description thereof will be omitted for brevity.

The processor 2300 may manage a plurality of devices by executing the device management module 2230. The device management module 2230 may transmit and receive data for interacting with the devices. The device management module 2230 may transmit, to another device, a user input input into the user device 2000, transmit, to the other device, a control command for controlling the other device, and receive device information from the other device. Operations, performed by the user device 2000, of interacting with the other devices have been described above, and thus, a repeated description thereof will be omitted for brevity.

In this regard, the modules stored in the memory 2200 described above are provided for convenience of description, and the present disclosure is not necessarily limited thereto. Other modules may be added to implement the above-described embodiments, some of the above-described modules may be implemented as a single module, or any one model of the above-described modules may be implemented by being separated into a plurality of modules.

In one embodiment, the one or more processors 2300 may include at least one of a central processing unit (CPU), a graphics processing unit (GPU), an accelerated processing unit (APU), a Many Integrated Core (MIC), a digital signal processor (DSP), and a neural processing unit (NPU). The one or more processors 2300 may be implemented in the form of an integrated system-on-chip (SoC) including one or more electronic components. Each of the one or more processors 2300 may be implemented as separate hardware (H/W).

When a method according to an embodiment of the present disclosure includes a plurality of operations, the plurality of operations may be performed by one processor 2300 or by a plurality of processors 2300. For example, when a first operation, a second operation, and a third operation are performed by the method according to an embodiment, the first operation, the second operation, and the third operation may all be performed by a first processor, or the first operation and the second operation may be performed by the first processor (e.g., a general-purpose processor) and the third operation may be performed by a second processor (e.g., an artificial intelligence-dedicated processor). Here, an example of the second processor may be an artificial intelligence-dedicated processor, and the artificial intelligence-dedicated processor may perform operations for training/inference of an artificial intelligence model. However, embodiments of the present disclosure are not limited thereto.

The one or more processors 2300 according to the present disclosure may be implemented as a single-core processor or as a multi-core processor.

When a method according to an embodiment of the present disclosure includes a plurality of operations, the plurality of operations may be performed by one core or by a plurality of cores included in the one or more processors 2300.

Further, although not shown in FIG. 11, the user device 2000 may further include additional components to perform operations of an embodiment of the present disclosure. For example, the user device 2000 may further include a display, a camera, a microphone, an input/output interface, etc.

The present disclosure provides a user device and an operating method thereof, wherein, in an environment where the user device interacts with a plurality of other devices, the user device may estimate whether the user device is present in the same space as the other devices. In addition, provided is a method of generating a training dataset for personalizing a copresence estimation model and using the training dataset to ensure that the copresence estimation model performs properly in a user's environment. The technical problems to be achieved by the present disclosure are not limited to those described above, and other technical problems not mentioned herein will be clearly understood by one of ordinary skill in the art from the description of the present specification.

According to an aspect of the present disclosure, an operating method of a user device may be provided. The method may include obtaining a first Wi-Fi RSSI corresponding to nearby Wi-Fi networks of the user device.

The method may include obtaining a plurality of second Wi-Fi RSSIs corresponding to nearby Wi-Fi networks of each of other devices.

The method may include estimating whether the other devices are present in a same space as the user device by applying the first Wi-Fi RSSI and the plurality of second Wi-Fi RSSIs as input data to a copresence estimation model.

The method may include receiving feedback on a result of the estimation. The method may include generating, based on the feedback, a feedback dataset including the first Wi-Fi RSSI and the plurality of second Wi-Fi RSSIs.

The method may include obtaining a pre-collected first Wi-Fi RSSI and a plurality of pre-collected second Wi-Fi RSSIs.

The method may include generating a filtered dataset by filtering the pre-collected first Wi-Fi RSSI and the plurality of pre-collected second Wi-Fi RSSIs according to preset conditions.

The method may include updating the copresence estimation model by using the feedback dataset and the filtered dataset.

The feedback may include location information of the user device and information indicating that the result of the estimation is inaccurate.

The generating of the feedback dataset may include based on the feedback, configuring a negative pair including the first Wi-Fi RSSI and a second Wi-Fi RSSI of a device estimated to be present in the same space as the user device, among the other devices.

The generating of the feedback dataset may include, based on the feedback, configuring a positive pair including the first Wi-Fi RSSI and a second Wi-Fi RSSI of a device having location information corresponding to the location information of the user device, among the other devices.

The generating of the filtered dataset may include applying the pre-collected first Wi-Fi RSSI and the plurality of pre-collected second Wi-Fi RSSIs as input data to the copresence estimation model.

The generating of the filtered dataset may include determining, based on a number of devices estimated to be present in the same space as the user device, among the other devices, whether to filter the pre-collected first Wi-Fi RSSI and the plurality of pre-collected second Wi-Fi RSSIs.

The generating of the filtered dataset may include, when the number of devices estimated to be present in the same space as the user device among the other devices is 1, configuring a positive pair including the first Wi-Fi RSSI and a second Wi-Fi RSSI of a device estimated to be present in the same space as the user device, and configuring a negative pair including the first Wi-Fi RSSI and a second Wi-Fi RSSI of remaining devices.

The generating of the filtered dataset may include classifying, on a per-device basis, the plurality of pre-collected second Wi-Fi RSSIs of the other devices that are matched with the pre-collected first Wi-Fi RSSI of the user device.

The generating of the filtered dataset may include, sampling, based on a result of the classification, a first Wi-Fi RSSI-second Wi-Fi RSSI pair to be included in the filtered dataset.

The generating of the filtered dataset may include, when the number of devices located in the same space among the other devices is 2 or more, assigning a weight for sampling to the first Wi-Fi RSSI-second Wi-Fi RSSI, based on the result of the estimation of the copresence estimation model.

The updating of the copresence estimation model may include assigning a higher weight to the feedback dataset than to the filtered dataset.

The updating of the copresence estimation model may include updating the copresence estimation model by using the weight.

According to an aspect of the present disclosure, a user device may be provided. The user device may include: a communication interface; memory storing one or more instructions; and one or more processors configured to execute the one or more instructions stored in the memory.

The one or more processors may execute the one or more instructions to obtain a first Wi-Fi RSSI corresponding to nearby Wi-Fi networks of the user device.

The one or more processors may execute the one or more instructions to obtain a plurality of second Wi-Fi RSSIs corresponding to nearby Wi-Fi networks of each of other devices.

The one or more processors may execute the one or more instructions to estimate whether the other devices are present in a same space as the user device by applying the first Wi-Fi RSSI and the plurality of second Wi-Fi RSSIs as input data to a copresence estimation model.

The one or more processors may execute the one or more instructions to receive feedback on a result of the estimation.

The one or more processors may execute the one or more instructions to generate, based on the feedback, a feedback dataset including the first Wi-Fi RSSI and the plurality of second Wi-Fi RSSIs.

The one or more processors may execute the one or more instructions to obtain a pre-collected first Wi-Fi RSSI and a plurality of pre-collected second Wi-Fi RSSIs.

The one or more processors may execute the one or more instructions to generate a filtered dataset by filtering the pre-collected first Wi-Fi RSSI and the plurality of pre-collected second Wi-Fi RSSIs according to preset conditions.

The one or more processors may execute the one or more instructions to update the copresence estimation model by using the feedback dataset and the filtered dataset.

The feedback may include location information of the user device and information indicating that the result of the estimation is inaccurate.

The one or more processors may execute the one or more instructions to, based on the feedback, configure a negative pair including the first Wi-Fi RSSI and a second Wi-Fi RSSI of a device estimated to be present in the same space as the user device, among the other devices.

The one or more processors may execute the one or more instructions to, based on the feedback, configure a positive pair including the first Wi-Fi RSSI and a second Wi-Fi RSSI of a device having location information corresponding to the location information of the user device, among the other devices.

The one or more processors may execute the one or more instructions to apply the pre-collected first Wi-Fi RSSI and the plurality of pre-collected second Wi-Fi RSSIs as input data to the copresence estimation model.

The one or more processors may execute the one or more instructions to determine, based on a number of devices estimated to be present in the same space as the user device, among the other devices, whether to filter the pre-collected first Wi-Fi RSSI and the plurality of pre-collected second Wi-Fi RSSIs.

The one or more processors may execute the one or more instructions to, when the number of devices estimated to be present in the same space as the user device among the other devices is 1, configure a positive pair including the first Wi-Fi RSSI and a second Wi-Fi RSSI of a device estimated to be present in the same space as the user device, and configure a negative pair including the first Wi-Fi RSSI and a second Wi-Fi RSSI of remaining devices.

The one or more processors may execute the one or more instructions to classify, on a per-device basis, the plurality of pre-collected second Wi-Fi RSSIs of the other devices that are matched with the pre-collected first Wi-Fi RSSI of the user device.

The one or more processors may execute the one or more instructions to sample, based on a result of the classification, a first Wi-Fi RSSI-second Wi-Fi RSSI pair to be included in the filtered dataset.

The one or more processors may execute the one or more instructions to, when the number of devices located in the same space among the other devices is 2 or more, assign a weight for sampling to the first Wi-Fi RSSI-second Wi-Fi RSSI, based on the result of the estimation of the copresence estimation model.

The one or more processors may execute the one or more instructions to assign a higher weight to the feedback dataset than to the filtered dataset.

The one or more processors may execute the one or more instructions to update the copresence estimation model by using the weight.

Further, embodiments of the present disclosure may be implemented in the form of a recording medium including computer-executable instructions, such as a program module executed by a computer. A computer-readable medium may be any available medium accessible by a computer, and includes both volatile and nonvolatile media, and both removable and non-removable media. In addition, the computer-readable medium may include a computer storage medium and a communication medium. The computer storage medium includes both volatile and non-volatile media, removable and non-removable media implemented in any method or technology for storage of information such as computer-readable instructions, data structures, program modules, or other data. The communication medium may typically include other data of a modulated data signal, such as computer-readable instructions, data structures, or program modules.

In addition, the computer-readable storage medium may be provided in the form of a non-transitory storage medium. Here, the "non-transitory storage medium" refers to a tangible device and does not include a signal (e.g., an electromagnetic wave), and this term does not distinguish between a case where data is stored in the storage medium semi-permanently and a case where data is stored in the storage medium temporarily. For example, the "non-transitory storage medium" may include a buffer in which data is temporarily stored.

According to an embodiment, the method according to various embodiments disclosed herein may be provided by being included in a computer program product. The computer program product may be traded as a commercial product between a seller and a buyer. The computer program product may be distributed in the form of a machine-readable storage medium (e.g., compact disc read only memory (CD-ROM)), or may be distributed online (e.g., downloaded or uploaded) through an application store or directly between two user devices (e.g., smartphones). In the case of online distribution, at least a part of the computer program product (e.g., a downloadable application) may be at least temporarily generated or temporarily stored in a machine-readable storage medium, such as a server of a manufacturer, a server of an application store, or a memory of a relay server.

The foregoing description of the present disclosure is provided for illustration, and it will be understood by one of ordinary skill in the art that various changes in form and details may be readily made therein without departing from the technical spirit or essential features of the present disclosure. Therefore, it should be understood that the embodiments described above are illustrative in all respects and not restrictive. For example, each element described to be of a single type may be implemented in a distributed manner and, likewise, elements described as being distributed may be implemented in a combined manner.

The scope of the present disclosure is defined by the appended claims rather than the foregoing detailed description, and all changes or modifications within the scope of the claims and their equivalents should be construed as being included in the scope of the present disclosure.

## Claims

1. An operating method of a user device, the method comprising:
obtaining a first Wi-Fi RSSI corresponding to nearby Wi-Fi networks of the user device;
obtaining a plurality of second Wi-Fi RSSIs corresponding to nearby Wi-Fi networks of each of other devices;
estimating whether the other devices are present in a same space as the user device by applying the first Wi-Fi RSSI and the plurality of second Wi-Fi RSSIs as input data to a copresence estimation model;
receiving feedback on a result of the estimation;
generating, based on the feedback, a feedback dataset comprising the first Wi-Fi RSSI and the plurality of second Wi-Fi RSSIs;
obtaining a pre-collected first Wi-Fi RSSI and a plurality of pre-collected second Wi-Fi RSSIs;
generating a filtered dataset by filtering the pre-collected first Wi-Fi RSSI and the plurality of pre-collected second Wi-Fi RSSIs according to preset conditions; and
updating the copresence estimation model by using the feedback dataset and the filtered dataset.

2. The method of claim 1, wherein the feedback comprises location information of the user device and information indicating that the result of the estimation is inaccurate.

3. The method of claim 2, wherein the generating of the feedback dataset comprises, based on the feedback, configuring a negative pair comprising the first Wi-Fi RSSI and a second Wi-Fi RSSI of a device estimated to be present in the same space as the user device, among the other devices.

4. The method of claim 2, wherein the generating of the feedback dataset comprises, based on the feedback, configuring a positive pair comprising the first Wi-Fi RSSI and a second Wi-Fi RSSI of a device having location information corresponding to the location information of the user device, among the other devices.

5. The method of claim 1, wherein the generating of the filtered dataset comprises:
applying the pre-collected first Wi-Fi RSSI and the plurality of pre-collected second Wi-Fi RSSIs as input data to the copresence estimation model; and
determining, based on a number of devices estimated to be present in the same space as the user device, among the other devices, whether to filter the pre-collected first Wi-Fi RSSI and the plurality of pre-collected second Wi-Fi RSSIs.

6. The method of claim 5, wherein the generating of the filtered dataset comprises, when the number of devices estimated to be present in the same space as the user device among the other devices is 1, configuring a positive pair comprising the first Wi-Fi RSSI and a second Wi-Fi RSSI of a device estimated to be present in the same space as the user device, and configuring a negative pair comprising the first Wi-Fi RSSI and a second Wi-Fi RSSI of remaining devices.

7. The method of claim 5, wherein the generating of the filtered dataset comprises:
classifying, on a per-device basis, the plurality of pre-collected second Wi-Fi RSSIs of the other devices that are matched with the pre-collected first Wi-Fi RSSI of the user device; and
sampling, based on a result of the classification, a first Wi-Fi RSSI-second Wi-Fi RSSI pair to be included in the filtered dataset.

8. A user device comprising:
a communication interface;
memory storing one or more instructions; and
one or more processors configured to execute the one or more instructions stored in the memory,
wherein the one or more processors execute the one or more instructions to
obtain a first Wi-Fi RSSI corresponding to nearby Wi-Fi networks of the user device,
obtain a plurality of second Wi-Fi RSSIs corresponding to nearby Wi-Fi networks of each of other devices,
estimate whether the other devices are present in a same space as the user device by applying the first Wi-Fi RSSI and the plurality of second Wi-Fi RSSIs as input data to a copresence estimation model,
receive feedback on a result of the estimation,
generate, based on the feedback, a feedback dataset comprising the first Wi-Fi RSSI and the plurality of second Wi-Fi RSSIs,
obtain a pre-collected first Wi-Fi RSSI and a plurality of pre-collected second Wi-Fi RSSIs,
generate a filtered dataset by filtering the pre-collected first Wi-Fi RSSI and the plurality of pre-collected second Wi-Fi RSSIs according to preset conditions, and
update the copresence estimation model by using the feedback dataset and the filtered dataset.

9. The user device of claim 8, wherein the feedback comprises location information of the user device and information indicating that the result of the estimation is inaccurate.

10. The user device of claim 9, wherein the one or more processors execute the one or more instructions to, based on the feedback, configure a negative pair comprising the first Wi-Fi RSSI and a second Wi-Fi RSSI of a device estimated to be present in the same space as the user device, among the other devices.

11. The user device of claim 9, wherein the one or more processors execute the one or more instructions to, based on the feedback, configure a positive pair comprising the first Wi-Fi RSSI and a second Wi-Fi RSSI of a device having location information corresponding to the location information of the user device, among the other devices.

12. The user device of claim 8, wherein the one or more processors execute the one or more instructions to
apply the pre-collected first Wi-Fi RSSI and the plurality of pre-collected second Wi-Fi RSSIs as input data to the copresence estimation model, and
determine, based on a number of devices estimated to be present in the same space as the user device, among the other devices, whether to filter the pre-collected first Wi-Fi RSSI and the plurality of pre-collected second Wi-Fi RSSIs.

13. The user device of claim 12, wherein the one or more processors execute the one or more instructions to, when the number of devices estimated to be present in the same space as the user device among the other devices is 1, configure a positive pair comprising the first Wi-Fi RSSI and a second Wi-Fi RSSI of a device estimated to be present in the same space as the user device, and configure a negative pair comprising the first Wi-Fi RSSI and a second Wi-Fi RSSI of remaining devices.

14. The user device of claim 12, wherein the one or more processors execute the one or more instructions to
classify, on a per-device basis, the plurality of pre-collected second Wi-Fi RSSIs of the other devices that are matched with the pre-collected first Wi-Fi RSSI of the user device, and
sample, based on a result of the classification, a first Wi-Fi RSSI-second Wi-Fi RSSI pair to be included in the filtered dataset.

15. A computer-readable recording medium having recorded thereon a program for executing, on a computer, the method of any one of claims 1 to 7.
